# FASCICULE DE BREVET EUROPEEN

(11) **EP 0 540 374 B1**
(45) Date de publication et mention de la délivrance du brevet: **22.12.1999**
(21) Numéro de dépôt: 92402292.4
(22) Date de dépôt: 17.08.1992
(51) Int. Cl.: C08G 63/668, D06M 15/507

(54) **Procédé de préparation de polyesters hydrosolubles et/ou hydrodispersables et utilisation de ces polyesters pour l'encollage de fils textiles**
Verfahren zur Herstellung von wasserlöslichen und/oder wasserdispergierbaren Polyestern und die Verwendung dieser Polyester zum Schlichten von Textilgarnen
Process for the preparation of hydrosoluble and/or hydrodispersable polyesters and the use of these polyesters for sizing textile yarns

(30) Priorité: 29.10.1991 FR 9113595
(43) Date de publication de la demande: 05.05.1993
(73) Titulaire: RHODIA CHIMIE, 92408 Courbevoie Cédex (FR)
(72) Inventeur: Fleury, Etienne, 69540 - Irigny (FR); Girardeau, Yvette, F-69270 Fontaines-sur-Saône (FR)
(74) Mandataire: Dubruc, Philippe

(56) Documents cités:
- EP-A- 0 029 620
- EP-A- 0 260 203
- EP-A- 0 275 802
- EP-A- 0 378 954
- FR-A- 2 608 506
- US-A- 3 725 351
- PATENT ABSTRACTS OF JAPAN vol. 10, no. 219 (C-363), 31 juillet 1986; & JP - A - 61057618 (TEIJIN LTD) 24.03.1986
- DATABASE WPI Derwent Publications Ltd., London, GB; DATABASE WPI, accession no. 7439064V, week 7421; & JP - A - 48103883 (TOYOBO CO LTD) 26.12.1973

## Description

La présente invention concerne un procédé de préparation de polyesters hydrosolubles et/ou hydrodispersables, utilisables pour l'encollage de fils textiles, plus particulièrement de fils eux-mêmes en polyester.

Dans le présent texte, le terme fils recouvre à la fois des assemblages de filaments unitaires de grande longueur ou des filés de fibres discontinues.

Des copolyesters, solubles ou dispersables dans l'eau, possédant simultanément des motifs téréphtalique, isophtalique, sodio-oxysulfonyl-5 isophtalique, éthylèneglycol et polyéthylèneglycol ont été décrits dans le brevet FR-A-1 602 002. Ils sont obtenus par copolycondensation du téréphtalate de diméthyle, de l'isophtalate de diméthyle, de l'acide sodio-oxysulfonyl-5 isophtalique et d'un mélange éthylèneglycol/polyéthylèneglycols dans lequel les polyéthylèneglycols représentent au moins 20 % du mélange.

Ces copolyesters sont utilisés comme apprêts temporaires dans l'industrie textile.

Ce procédé implique donc l'utilisation de diols relativement coûteux tels que le diéthylèneglycol.

Selon le brevet JP-A-63.256 619, le procédé précédent ne permettrait pas d'obtenir facilement un degré suffisant de polycondensation. Pour remédier à cet inconvénient, JP-A-63.256 619 préconise de réaliser tout d'abord une étape d'estérification directe entre l'acide téréphtalique, l'acide isophtalique et l'éthylèneglycol, suivie d'une réaction de transestérification entre le sodio-oxysulfonyl-5 isophtalate de diméthyle et une nouvelle quantité d'éthylèneglycol et enfin une polycondensation finale. Ce procédé permet d'obtenir une proportion minime, inférieure à 3 %, de motifs diéthylèneglycol.

Le procédé de la présente invention se propose au contraire de préparer des copolyesters hydrosolubles et/ou hydrodispersables qui comportent, outre les motifs éthylèneglycol -OCH₂-CH₂-O-, différents motifs polyoxyéthylèneglycol 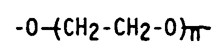 n représentant un nombre de 2 à 4.

Il se propose également de permettre la préparation de copolyesters présentant une température de transition vitreuse plus basse qu'avec le procédé selon JP-A-63.256619 et qui peut être ajustée selon les applications visées.

L'invention concerne un procédé de préparation d'un copolyester hydrosoluble et/ou hydrodispersable comportant des motifs téréphtalate, isophtalate, sulfoaryldicarboxylate, éthylèneglycol et polyoxyéthylèneglycol, caractérisé en ce qu'il comprend les étapes successives suivantes :
- une réaction de transestérification (interéchange) entre d'une part le téréphtalate de diméthyle et un sulfo-aryldicarboxylate de diméthyle et d'autre part l'éthylèneglycol, le rapport molaire éthylèneglycol/diesters étant compris entre 1,8 et 3,5 et de préférence entre 2,0 et 3,0 ;
- une réaction d'estérification directe, par ajout d'acide isophtalique et d'une nouvelle quantité d'éthylèneglycol dans le milieu réactionnel, le rapport molaire éthylèneglycol/acide isophtalique étant compris entre 1,8 et 3,0 et de préférence entre 2,0 et 2,8,
- une réaction de polycondensation.

Les sulfoaryldicarboxylates de méthyle utilisés dans le procédé sont des composés qui présentent au moins un groupement acide sulfonique, le plus souvent sous la forme de sulfonate alcalin et 2 fonctions acide carboxylique fixées sur un ou plusieurs cycles aromatiques. Ce sont plus particulièrement les composés de formule (I) : 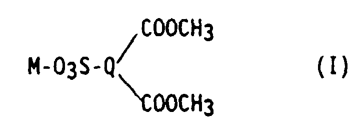 dans laquelle :
- M représente un atome d'hydrogène ou de préférence un atome de sodium, de potassium ou de lithium,
- Q représente un radical phényle ou une combinaison de plusieurs radicaux phényles ortho- ou péri condensés ou de plusieurs radicaux phényles liés entre eux par des groupes inertes tels que lien valentiel simple, radical alkylène, groupe éther, groupe cétone ou groupe sulfone.

Comme exemples spécifiques de tels composés de formule (I), on peut citer les esters diméthyliques des diacides carboxyliques suivants, dont la fonction acide sulfonique est libre ou salifiée par un atome de sodium, de potassium ou de lithium : les acides sulfo-téréphtaliques, les acides sulfo-isophtaliques, les acides sulfo-orthophtaliques, l'acide sulfo-4 naphtalène-dicarboxylique-2,7, les sulfo-bis(hydroxycarbonyl)-4,4' diphénylsulfones, les acides sulfo-diphényl-dicarboxyliques, les sulfo-bis(hydroxycarbonyl)-4,4' diphénylméthanes, les acides sulfophénoxy-5 isophtaliques.

Parmi les composés de formule (I) qui peuvent être utilisés dans le procédé de l'invention, on préfère tout particulièrement le sodio-oxysulfonyl-5 isophtalate de diméthyle.

L'étape d'interéchange est effectuée à une température qui permet notamment d'éliminer du milieu réactionnel le méthanol formé dans la réaction.

Cette élimination du méthanol formé se fait habituellement par distillation.

La température à laquelle est réalisée la réaction d'interéchange est de préférence égale ou supérieure à 130°C et plus préférentiellement comprise entre 140°C et 250°C.

Le plus souvent cette réaction est conduite sous pression atmosphérique, mais elle peut également être réalisée sous pression plus faible.

Cette réaction est de préférence effectuée en présence d'un catalyseur de transestérification.

Les catalyseurs de transestérification sont généralement des dérivés métalliques.

Les plus couramment utilisés sont les carboxylates métalliques comme l'acétate de manganèse, l'acétate de zinc, l'acétate de cobalt ou l'acétate de calcium ; les titanates organiques comme le titanate de butyle ou le titanate de nitrilo-2,2',2"-triéthyle (ou aminotriéthanolate de titane) et les titanates minéraux comme le titanate de calcium.

Parmi ces catalyseurs, on préfère utiliser les titanates organiques, notamment ceux indiqués précédemment.

La quantité de catalyseur représente généralement au moins 0,005 % en poids par poids total des réactifs et de préférence de 0,01 % à 2 % en poids par poids.

La réaction d'interéchange est généralement poursuivie jusqu'à distillation de pratiquement tout le méthanol formé, c'est-à-dire d'au moins 90 % du méthanol formé.

De préférence au moins une partie de l'excès d'éthylèneglycol introduit au début de la réaction, par rapport à la quantité stoechiométrique, est également distillée après élimination du méthanol.

L'étape d'estérification est réalisée ensuite par ajout d'acide isophtalique et d'éthylèneglycol dans le milieu réactionnel.

La température à laquelle cet ajout est effectué correspond à la température de la fin de l'étape d'interéchange.

La température de la réaction d'estérification directe est généralement comprise entre 210°C et 280°C et de préférence entre 220°C et 260°C.

La réaction d'estérification directe est le plus souvent réalisée en présence d'un catalyseur.

Comme catalyseur d'estérification directe, on peut utiliser les catalyseurs indiqués précédemment pour la réaction d'interéchange.

De préférence, on utilise le même catalyseur pour les réactions d'interéchange et d'estérification directe. Dans ce cas, le catalyseur peut être introduit en totalité lors de l'étape d'interéchange.ou être introduit en plusieurs fois.

La quantité de catalyseur d'estérification directe représente généralement au moins 0,005 % en poids par rapport au poids d'acide isophtalique et d'éthylène glycol engagé dans ladite réaction d'estérification directe. De préférence la quantité de catalyseur d'estérification directe sera de 0,01 % à 2 % en poids par poids.

Pendant l'étape d'estérification directe, on élimine par distillation l'eau formée dans la réaction et l'excès d'éthylèneglycol.

Lorsque l'étape d'estérification directe est terminée, c'est-à-dire lorsque l'eau et l'excès d'éthylèneglycol ont été éliminés du mélange réactionnel, on effectue la réaction de polycondensation.

La réaction de polycondensation est généralement catalysée.

Comme catalyseurs de polycondensation on peut citer le trioxyde d'antimoine et le dioxyde de germanium.

Le catalyseur peut être introduit dans le milieu réactionnel à la fin de la réaction d'estérification directe ou antérieurement.

La réaction de polycondensation est généralement réalisée à une température de 230°C à 280°C et de préférence de 240°C à 260°C.

Préférentiellement elle est effectuée sous une pression inférieure à la pression atmosphérique.

Selon un mode préféré, la pression dans le réacteur est diminuée progressivement de la pression initiale à une pression qui peut aller par exemple jusqu'à 10 Pa.

Cette réduction de pression peut durer de quelques minutes à plusieurs heures, mais le plus souvent elle est réalisée en 30 minutes à 2 heures.

Le procédé de l'invention permet d'obtenir des copolyesters hydrosolubles et/ou hydrodispersables possèdant une structure et des propriétés les rendant très adaptés à l'encollage des fils textiles.

La masse mollaire moyenne en poids des copolyesters préparés est généralement de 40 000 à 60 000, mais on peut le cas échéant aller au-delà de ces valeurs.

Ces masses moléculaires en poids sont mesurées par chromatographie par perméation de gel, dans un vecteur solvant, (à 60°C) comme le diméthylacétamide ou la N-méthylpyrrolidone, contenant 5 x 10⁻³ N de Li Br. Ces résultats sont exprimés en équivalents polystyrène.

Ces copolyesters comportent essentiellement des enchaînements de motifs téréphtalate, sodio-oxysulfonyl-5 isophtalate, isophtalate, éthylèneglycol et polyoxyéthylèneglycol.

Dans le présent texte, on considère dans l'enchaînement polymérique des copolyesters hydrosolubles et/ou hydrodispersables que les différents motifs sont représentés de la manière suivante :
- motif téréphtalate = reste provenant de l'acide téréphtalique : 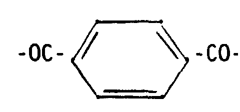
- motif isophtalate = reste provenant de l'acide isophtalique : 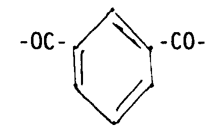
- motif sulfo-aryldicarboxylate = reste provenant de l'acide sulfoaryldicarboxylique :

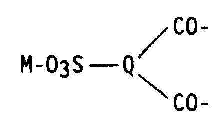

Les motifs polyoxyéthylène-glycols sont des successions de radicaux éthylène séparés par des atomes d'oxygène ; ce sont plus particulièrement les radicaux :
. -O-CH₂CH₂-O-CH₂-CH₂-O appelé communément diéthylèneglycol (ou trioxa-1,4,7 heptaméthylène),
. -O-CH₂-CH₂-O-CH₂-CH₂-O-CH₂-CH₂-O appelé communément triéthylèneglycol(ou tétra-oxa-1,4,7,10 décaméthylène),
. -O-CH₂-CH₂-O-CH₂-CH₂-O-CH₂-CH₂-O-CH₂-CH₂-O- appelé communément tétraéthylèneglycol (ou penta oxa-1,4,7,10,13 tridécaméthylène).

Dans la formule des copolyesters préparés selon le procédé de l'invention, le pourcentage molaire de chacun de ces motifs éthylèneglycol et polyoxyéthylène-glycols par rapport à la totalité desdits motifs se situe généralement dans les zones de valeurs suivantes :
- motifs éthylèneglycol (EG) de 35 % à 60 %
- motifs diéthylèneglycol (DEG) de 20 % à 50 %
- motifs triéthylèneglycol (TEG) de 5 % à 25 %
- motifs tétraéthylèneglycol (QEG) de 0 % à 5 %

Les motifs provenant de chacun des diacides mis en oeuvre dans le procédé se répartissent en pourcentage molaire par rapport à l'ensemble des motifs provenant des diacides de la manière suivante :
- motif téréphtalate (TER) de 10 % à 75 %,
- motif isophtalate (ISO) de 15 % à 70 %,
- motif sulfoaryldicarboxylate et plus particulièrment motif sodio-oxysulfonyl-5 isophtalate (NaS-ISO) de 8 % à 20 %.

Par le procédé de l'invention, on peut préparer des copolyesters hydrosolubles et/ou hydrodispersables qui présentent une température de transition vitreuse à 85 % d'humidité relative supérieure ou égale à 15°C et inférieure ou égale à 40°C.

Ces copolyesters sont ainsi particulièrement adaptés pour l'encollage des fils parce qu'ils conduisent au meilleur compromis entre 2 défauts rédhibitoires, qui sont le "blocking" (recollage sur ensouples) lors du réunissage des ensouples primaires ou du déroulement de la bobine de l'ensouple sur le métier et l'encrassage des métiers par poudrage (phénomène représentatif d'une abrasion).

Les copolyesters hydrosolubles et/ou hydrodispersables obtenus par le procédé de l'invention présentent également en solution aqueuse, de 10 % à 25 % par exemple, une bonne stabilité dans le temps. Ces solutions aqueuses de copolyesters possèdent une valeur de turbidité faible qui n'évolue pas ou très peu dans le temps et on n'observe donc pas de décantation de ces solutions après quelques jours ou semaines de stockage.

Un procédé d'encollage des chaînes de fils textiles, consistant à appliquer les copolyesters hydrosolubles et/ou hydrodispersables préparés par le présent procédé, en milieu aqueux. Le principe de cette technique est d'immerger les fils dans un bain aqueux contenant le copolyester à la concentration et à la température désirées, puis d'essorer lesdits fils par passage entre des rouleaux et enfin de sécher les fils encollés dans des chambres chaudes : la chaîne est alors prête à être tissée.

Parmi les méthodes classiques d'encollage pour fil continu (filament yarn ou continuous filament yarn), on peut citer par exemple l'encollage en sectionnel (European system), l'encollage conventionnel (classic system ou English system) et l'encollage en nappe primaire (single end sizing ou Japan system).

Les copolyesters de l'invention sont particulièrement intéressants pour apprêter les fils (filament yarns) synthétiques de polytéréphtalate d'éthylèneglycol qui sont parmi les fils textiles (yarns) les plus difficiles à encoller, mais sont également utilisables pour des fibres (spun yarns) de polytéréphtalate d'éthylèneglycol éventuellement mélangées avec des fibres naturelles, pour des fibres naturelles comme le coton par exemple, pour des fibres de verre ou pour d'autres fils comme : les fils synthétiques tels que acryliques, polyimides, chlorofibre, polyéthylène, polypropylène ou les fils artificiels tels que acétates, triacétates, viscose.

De plus, ils permettent d'encoller n'importe quel type de fils, qu'ils soient texturés ou non, tordus ou non et selon n'importe quelle technique d'encollage, que ce soit de l'encollage en sectionnel, en conventionnel, en nappe primaire ou autre.

Un avantage très important de ces produits est qu'ils résistent aux contraintes de rendement des nouveaux métiers à tisser. Ils permettent d'effectuer l'encollage et le tissage à grande vitesse. En outre, ils sont facilement éliminables à l'eau.

Les exemples qui suivent illustrent l'invention

### Exemple n° 1

Dans un réacteur en acier inoxydable de 7,5 litres, muni d'un agitateur à ancre, d'une double enveloppe pour la circulation d'un liquide caloporteur et d'une colonne de distillation régulée par une électrovanne, on introduit à froid :
- 2262 g (11,648 mol) de téréphtalate de diméthyle (DMT),
- 577 g (1,947 mol) de sulfo-oxysulfonyl-5 isophtalate de diméthyle (SIPD),
- 2453 g (39,56 mol) d'éthylèneglycol (EG),
- 0,91 g d'aminotriéthanolate de titane comme catalyseur d'interéchange,
- 0,237 g de trioxyde d'antimoine comme catalyseur de polycondensation.

### Rapport molaire diol/diesters RM₁ = 2,91

L'agitation est mise en marche, puis le contenu du réacteur est porté rapidement à 182°C, température à laquelle le méthanol commence à distiller. La température du mélange réactionnel est alors portée entre 220°C et 230°C en environ 120 minutes pour distiller l'ensemble du méthanol et une partie de l'éthylène glycol en excès.

Lorsque la masse réactionnelle est à 230°C, on introduit sur une période de 1 heure la suspension acide isophtalique/éthylène glycol suivante :
- 495 g (2,98 mol) d'acide isophtalique (AI),
- 472 g (7,615 mol) d'éthylène glycol (EG).

### Rapport molaire diol/diacide RM₂ = 2,555

Pendant l'introduction, la température ne chute pas au-dessous de 227°C et ne dépasse pas 233°C. Après l'introduction de la suspension précédente, la masse réactionnelle est portée de 230°C à 250°C en 1 heure. Durant cette période, on distille un mélange eau/éthylène glycol.

A 250°C, la masse réactionnelle est transférée dans un autoclave préchauffé à 250°C. La pression est alors réduite de 100 KPa (pression atmosphérique) à 130 Pa en 50 minutes et la polycondensation est poursuivie pendant environ 45 minutes.

Le polymère est ensuite coulé et refroidi.

On réalise les analyses suivantes :
1) Evaluation de la masse molaire en poids par chromatograhie par perméation de gel (GPC) dans la N-méthylpyrrolidone à 60°C. Les valeurs sont données en équivalents polystyrène.
2) Estimation de la teneur en motifs éthylèneglycol et polyoxyéthylèneglycol par méthanolyse préalable du polymère et dosage par chromatographie en phase vapeur (CPV). Les résultats sont exprimés pour chaque motif en pourcentage molaire par rapport à la somme desdits motifs.
3) Détermination des températures de transition vitreuse (Tg°C) après conditionnement des polymères sous forme de film à 85 % en humidité relative pendant 8 jours.
4) Mesure de la turbidité juste après solubilisation puis après 10 jours de stockage. La mesure est réalisée, avec des solutions à 25 % en polymère dans de l'eau déminéralisée, sur un appareil turbidimètre HACH, les résultats sont exprimés en unité NTU (Normal Turbidity Units) et l'appareil est préalablement étalonné avec une solution de formazine.

Les propriétés du copolyester (A) obtenu figurent dans le tableau n° 1.

### Exemple n° 2

On reproduit l'exemple n° 1 en suivant le même mode opératoire, mais en modifiant les rapports molaires. Les quantités suivantes ont été chargées : 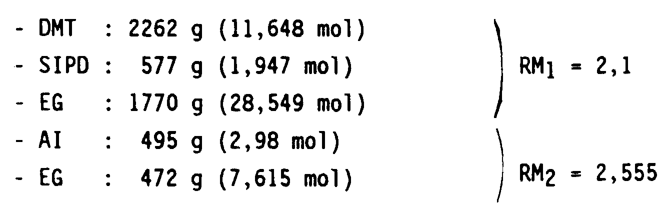
- Catalyseurs :: 0,91 g d'aminotriéthanolate de titane
0,237 g de trioxyde d'antimoine

Les propriétés du copolyester A₁ ainsi obtenu figurent dans le tableau n° 1 ci-après.

### Exemple n° 3

On reproduit l'exemple n° 1 en suivant le même mode opératoire, mais en modifiant les rapports molaires. Les quantités suivantes ont été chargées : 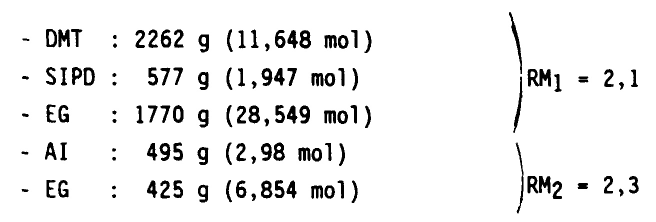
- Catalyseurs :: 0,91 g d'aminotriéthanolate de titane
0,237 g de trioxyde d'antimoine

Les propriétés du copolyester A₂ ainsi obtenu figurent dans le tableau n° 1 ci-après.

### Exemple n° 4

On reproduit l'exemple n° 1 en suivant le même mode opératoire, mais en modifiant les rapports molaires. Les quantités suivantes ont été chargées : 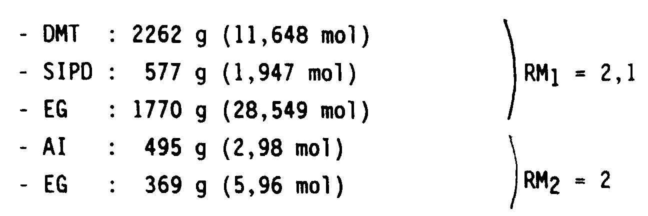
- Catalyseurs :: 0,91 g d'aminotriéthanolate de titane
0,237 g de trioxyde d'antimoine

Les propriétés du copolyester A₃ ainsi obtenu figurent dans le tableau n° 1 ci-après.

### Exemple n° 5

On reproduit l'exemple n° 1 en suivant le même mode opératoire, mais en modifiant les rapports molaires. Les quantités suivantes ont été chargées : 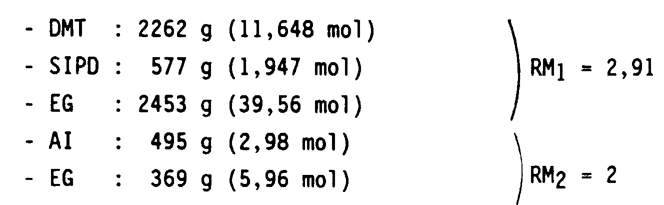
- Catalyseurs :: 0,91 g d'aminotriéthanolate de titane
0,237 g de trioxyde d'antimoine

Les propriétés du copolyester A₄ ainsi obtenu figurent dans le tableau n° 1 ci-après.

### Exemple n° 6

Pour comparer les copolyesters précédents obtenus à l'aide de notre procédé avec les copolyesters de structures différentes, nous avons réalisé les copolyesters B et B₁ selon le mode opératoire suivant.

Dans le même réacteur en acier que précédemment, on introduit à froid les réactifs suivants :
- DMT : 2006 g (10,329 mol)
- DMI* : 512 g (2,641 mol)
- SIPD : 512 g (1,727 mol)
- EG : 518 g (8,37 mol)
- DEG**: 2071 g (19,54 mol) RM₃= EG/DEG = 30/70

- Catalyseurs :: 0,83 g d'aminotriéthanolate de titane
0,215 g de trioxyde d'antimoine
2,25 g d'acétate de sodium

* DMI = isophtalate de diméthyle
** DEG = diéthylèneglycol

Les propriétés du copolyester B figurent dans le tableau n° 2.

L'agitation est mise en marche, puis le contenu du réacteur est porté rapidement à 182°C, température à laquelle le méthanol commence à distiller. La température du mélange réactionnel est alors portée de 182°C à 250°C en environ 2 h 40 pour distiller l'ensemble du méthanol.

Lorsqu'elle est à 250°C la masse réactionnelle est transférée dans un autoclave préchauffé à 250°C. La pression est alors réduite de 100 KPa à 130 Pa en 50 minutes et la polycondensation est poursuivie pendant 60 minutes.

### Exemple n° 7

On reproduit l'exemple n° 6 en suivant le même mode opératoire, mais en modifiant la quantité respective d'éthylène glycol (EG) et du diéthylène glycol (DEG).
- DMT : 2006 g (10,329 mol)
- DMI : 512 g (2,641 mol)
- SIPD : 512 g (1,727 mol)
- EG : 865 g (13,96 mol)
- DEG : 1480 g (13,96 mol) RM₃ = EG/DEG = 50/50

- Catalyseurs :: 0,83 g d'aminotriéthanolate de titane
0,215 g de trioxyde d'antimoine
2,25 g d'acétate de sodium

Les propriétés du copolyester B₁ figurent dans le tableau n° 2.

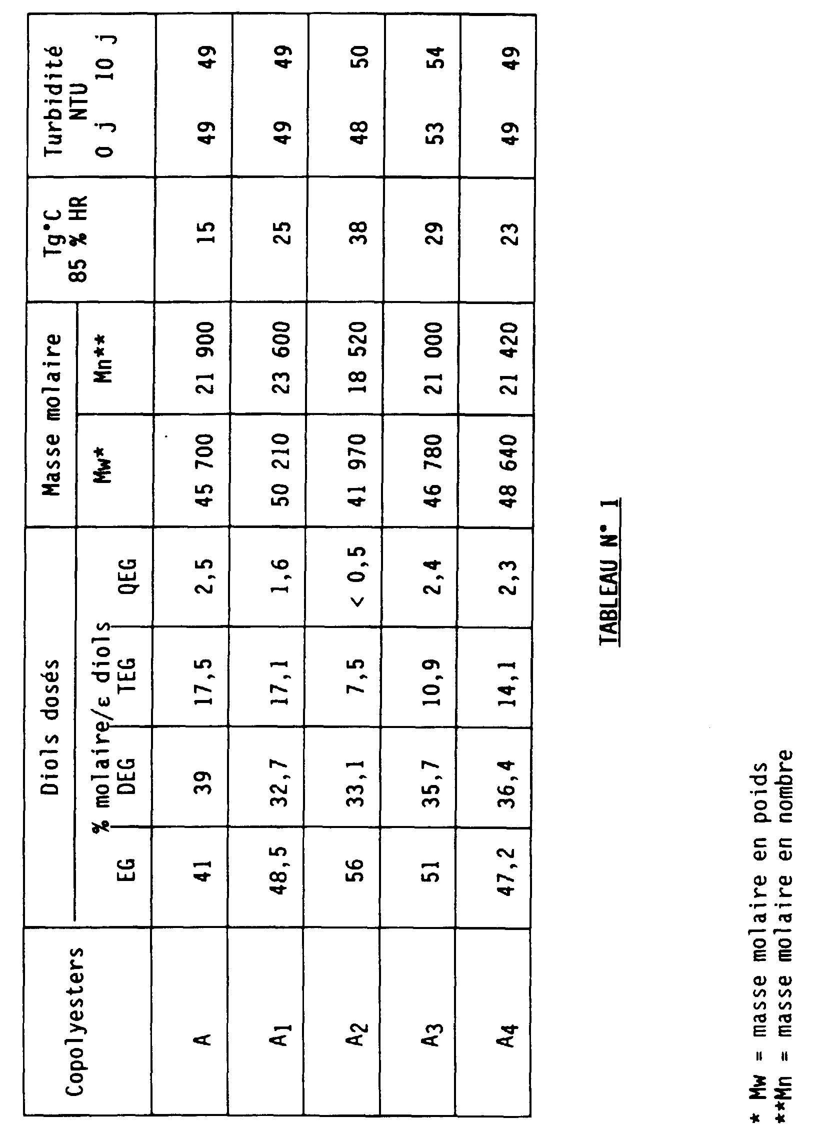

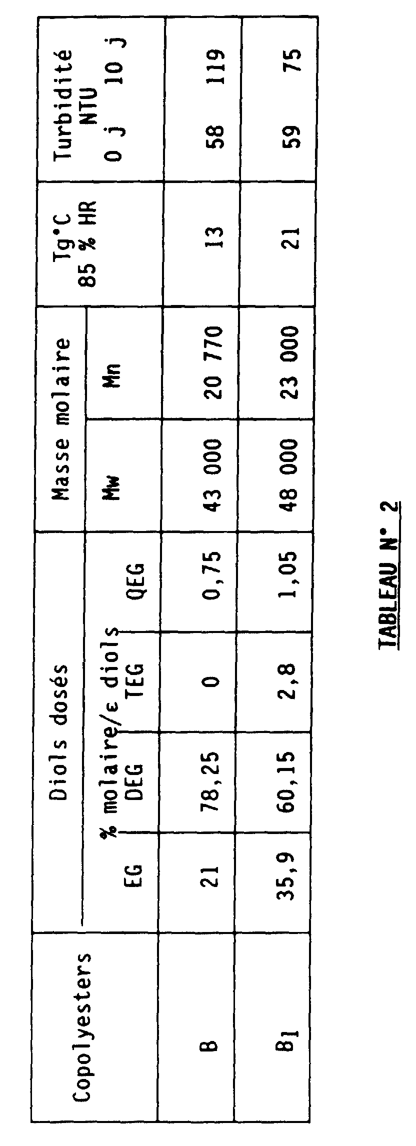

On note avec les solutions aqueuses des copolyesters A à A₄ obtenus selon le procédé de l'invention une stabilité de la turbidité au stockage, alors que les copolyesters obtenus selon un procédé antérieur présentent une évolution rapide de cette turbidité. Après un stockage d'un mois, les solutions des copolyesters A à A₄ sont demeurées homogènes tandis que les solutions de copolyesters B et B₂ ont décanté et sont devenues inutilisables pour l'encollage des fils textiles.

## Revendications

1. Procédé de préparation d'un copolyester hydrosoluble et/ou hydrodispersable comportant des motifs téréphtalate, isophtalate, sulfoaryldicarboxylate, éthylèneglycol et polyoxyéthylèneglycol, caractérisé en ce qu'il comprend les étapes successives suivantes :
- une réaction de transestérification (Interéchange) entre d'une part le téréphtalate de diméthyle et le sulfoaryldicarboxylate de diméthyle et d'autre part l'éthylèneglycol, le rapport molaire éthylèneglycol/diesters étant compris entre 1,8 et 3,5 et de préférence entre 2,0 et 3,0 ;
- une réaction d'estérification directe, par ajout d'acide isophtalique et d'une nouvelle quantité d'éthylèneglycol dans le milieu réactionnel, le rapport molaire éthylèneglycol/acide isophtalique étant compris entre 1,8 et 3,0 et de préférence entre 2,0 et 2,8,
- une réaction de polycondensation.

2. Procédé selon la revendication 1, caractérisé en ce que le sulfoaryldicarboxylate de diméthyle est choisi parmi les composés de formule (I) : 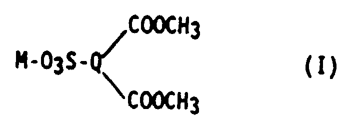 dans laquelle :
- M représente un atome d'hydrogène ou de préférence un atome de sodium, de potassium ou de lithium,
- Q représente un radical phényle ou une combinaison de plusieurs radicaux phényles ortho- ou péri condensés ou de plusieurs radicaux phényles liés entre eux par des groupes inertes tels que lien valentiel simple, radical alkylène, groupe éther, groupe cétone ou groupe sulfone.

3. Procédé selon l'une des revendications 1 ou 2, caractérisé en ce que le sulfoaryldicarboxylate de diméthyle est le sodiooxysulfonyl-5 isophtalate de diméthyle.

4. Procédé selon l'une des revendications 1 à 3, caractérisé en ce que la température à laquelle est réalisée la réaction d'interéchange est égale ou supérieure à 130°C et préférentiellement comprise entre 140°C et 250°C.

5. Procédé selon l'une des revendications 1 à 4, caractérisé en ce que la réaction d'interéchange est effectuée en présence d'un catalyseur de transestérification, généralement choisi parmi les dérivés métalliques tels que les carboxylates métalliques comme l'acétate de manganèse, l'acétate de zinc, l'acétate de cobalt ou l'acétate de calcium ; les titanates organiques comme le titanate de butyle ou le titanate de nitrilo-2,2',2"-triéthyle (ou aminotriéthanolate de titane) et les titanates minéraux comme le titanate de calcium.

6. Procédé selon la revendication 5, caractérisé en ce que la quantité de catalyseur représente au moins 0,005 % en poids par poids total des réactifs et de préférence de 0,01 % à 2 % en poids par poids.

7. Procédé selon la revendication 1 caractérisé en ce que la réaction d'estérification décrite est réalisée à une température comprise entre 210°C et 280°C et de préférence entre 220°C et 260°C.

8. Procédé selon la revendication 7, caractérisé en ce que la réaction d'estérification directe est réalisée en présence d'un catalyseur choisi parmi les dérivés métalliques tels que les carboxylates métalliques comme l'acétate de manganèse, l'acétate de zinc, l'acétate de cobalt ou l'acétate de calcium ; les titanates organiques comme le titanate de butyle ou le titanate de nitrilo-2,2',2"-triéthyle (ou aminotriéthanolate de titane) et les titanates minéraux comme le titanate de calcium.

9. Procédé selon la revendication 8, caractérisé en ce que la quantité de catalyseur d'estérification directe représente au moins 0,005 % en poids par rapport au poids d'acide isophtalique et d'éthylène glycol engagé dans ladite réaction d'estérification directe et de préférence de 0,01 % à 2 % en poids par poids.

10. Procédé selon la revendication 1 caractérisé en ce que la réaction de polycondensation est réalisée à une température de 230°C à 280°C et de préférence de 240°C à 260°C.

11. Procédé selon la revendication 10, caractérisé en ce que la réaction de polycondensation est réalisée en présence d'un catalyseur choisi parmi le trioxyde d'antimoine et le dioxyde de germanium.

12. Procédé selon l'une des revendications 10 ou 11, caractérisé en ce que la réaction de polycondensation est effectuée sous une pression inférieure à la pression atmosphérique.

## Patentansprüche

1. Verfahren zur Herstellung eines wasserlöslichen und/oder wasserdispergierbaren Copolyesters, umfassend Struktureinheiten Terephthalat, Isophthalat, Sulfoaryldicarboxylat, Ethylenglycol und Polyoxyethylenglycol, dadurch gekennzeichnet, daß es die nachstehenden, aufeinanderfolgenden Stufen umfaßt:
- eine Reaktion zur Umesterung (interéchange) zwischen einerseits Terephthalsäure-dimethylester und Sulfoaryldicarbonsäure-dimethylester und andererseits Ethylenglycol, wobei das molare Verhältnis Ethylenglycol/Diester zwischen 1,8 und 3,5 und vorzugsweise zwischen 2,0 und 3,0 beträgt;
- eine Reaktion zur direkten Veresterung durch Zusatz von Isophthalsäure und einer neuen Menge von Ethylenglycol zu dem Reaktionsmedium, wobei das molare Verhältnis Ethylenglycol/Isophthalsäure zwischen 1,8 und 3,0 und vorzugsweise zwischen 2,0 und 2,8 beträgt;
- eine Reaktion zur Polykondensation.

2. Verfahren nach Anspruch 1, dadurch gekennzeichnet, daß der Sulfoaryldicarbonsäure-dimethylester ausgewählt wird unter den Verbindungen der Formel (I) 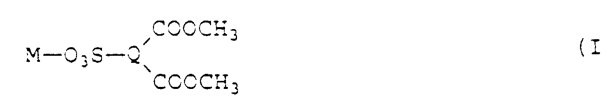 in der
- M ein Wasserstoffatom oder vorzugsweise ein Atom von Natrium, Kalium oder Lithium darstellt,
- Q einen Rest Phenyl oder eine Kombination von mehreren ortho- oder perikondensierten Resten Phenyl oder mehreren Resten Phenyl bedeutet, die untereinander durch inerte Gruppen verbunden sind wie eine einfache Valenzbindung, ein Rest Alkylen, eine Gruppe Ether, Gruppe Keton oder Gruppe Sulfon.

3. Verfahren nach einem der Ansprüche 1 oder 2, dadurch gekennzeichnet, daß der Sulfoaryldicarbonsäure-dimethylester Natrium-5-oxysulfonyl-isophthalsäure-dimethylester ist.

4. Verfahren nach einem der Ansprüche 1 bis 3, dadurch gekennzeichnet, daß die Temperatur, bei der die Reaktion der Umesterung durchgeführt wird, gleich oder höher 130 °C beträgt und vorzugsweise zwischen 140 °C und 250 °C liegt.

5. Verfahren nach einem der Ansprüche 1 bis 4, dadurch gekennzeichnet, daß die Reaktion der Umesterung in Anwesenheit eines Umesterungskatalysators durchgeführt wird, im allgemeinen ausgewählt unter den Metallderivaten wie den Metallcarboxylaten, beispielsweise Manganacetat, Zinkacetat, Cobaltacetat oder Calciumacetat; den organischen Titanaten wie Butyltitanat oder 2,2',2"-Nitrilo-triethyltitanat (oder Titan-aminotriethanolat) und den mineralischen Titanaten wie Calciumtitanat.

6. Verfahren nach Anspruch 5, dadurch gekennzeichnet, daß die Menge des Katalysators mindestens 0,005 Gew.-% pro Gesamtgewicht der Reaktanden und vorzugsweise 0,01 Gew.-% bis 2 Gew.-% pro Gewicht darstellt.

7. Verfahren nach Anspruch 1, dadurch gekennzeichnet, daß die beschriebene Reaktion der Veresterung bei einer Temperatur zwischen 210 °C und 280 °C und vorzugsweise zwischen 220 °C und 260 °C realisiert wird.

8. Verfahren nach Anspruch 7, dadurch gekennzeichnet, daß die Reaktion der direkten Veresterung in Anwesenheit eines Katalysators realisiert wird, ausgewählt unter den Metallderivaten wie den Metallcarboxylaten, beispielsweise Manganacetat, Zinkacetat, Cobaltacetat oder Calciumacetat; den organischen Titanaten wie Butyltitanat oder 2,2',2"-Nitrilo-triethyltitanat (oder Titan-aminotriethanolat) und den mineralischen Titanaten wie Calciumtitanat.

9. Verfahren nach Anspruch 8, dadurch gekennzeichnet, daß die Menge des Katalysators für die direkte Veresterung mindestens 0,005 Gew.-%, bezogen auf das Gewicht von Isophthalsäure und Ethylenglycol, die bei der genannten Reaktion der direkten Veresterung eingesetzt werden, und vorzugsweise 0,01 Gew.-% bis 2 Gew.-% pro Gewicht darstellt.

10. Verfahren nach Anspruch 1, dadurch gekennzeichnet, daß die Reaktion der Polykondensation bei einer Temperatur zwischen 230 °C und 280 °C und vorzugsweise zwischen 240 °C und 260 °C realisiert wird.

11. Verfahren nach Anspruch 10, dadurch gekennzeichnet, daß die Reaktion der Polykondensation in Anwesenheit eines Katalysators realisiert wird, ausgewählt unter Antimontrioxid und Germaniumdioxid.

12. Verfahren nach einem der Ansprüche 10 oder 11, dadurch gekennzeichnet, daß die Reaktion der Polykondensation unter einem niedrigeren Druck als dem atmosphärischen Druck durchgeführt wird.

## Claims

1. A process for the preparation of a hydrosoluble and/or hydrodispersible copolyester, having terephthalate, isophthalate, sulphoaryl dicarboxylate, ethylene glycol and polyoxyethylene glycol units, characterised in that it comprises the following successive stages:
- a transesterification reaction (interchange) between the dimethyl terephthalate and the dimethyl sulfoaryl dicarboxylate, on the one hand, and the ethylene glycol, on the other hand, the ethylene glycol/diester molar ratio being between 1.8 and 3.5, and preferably between 2.0 and 3.0;
- a direct esterification reaction, by adding isophthalic acid and a new quantity of ethylene glycol to the reaction medium, the ethylene glycol/isophthalic acid molar ratio being between 1.8 and 3.0, and preferably between 2.0 and 2.8;
- a polycondensation reaction.

2. A process according to Claim 1, characterised in that the dimethyl sulphoaryldicarboxylate is selected from the compounds of formula (I): 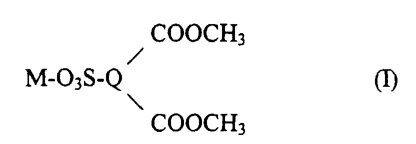 wherein:
- M represents a hydrogen atom, or, preferably, a sodium, potassium or lithium atom,
Q represents a phenyl radical or a combination of several ortho- or pericondensed phenyl radicals, or several phenyl radicals bonded together by inert groups, such as a single valency bond, alkylene radical, ether group, ketone group or sulphone group.

3. A process according to one of Claims 1 or 2, characterised in that the dimethyl sulphoaryl dicarboxylate is dimethyl sodium-5-oxysulphonyl isophthalate.

4. A process according to one of Claims 1 to 3, characterised in that the temperature at which the interchange reaction is carried out is equal to or greater than 130°C, and is preferably between 140°C and 250°C.

5. A process according to one of Claims 1 to 4, characterised in that the interchange reaction is carried out in the presence of a transesterification catalyst usually selected from metal derivatives such as metal carboxylates like manganese acetate, zinc acetate, cobalt acetate or calcium acetate; organic titanates, like butyl titanate or 2,2',2"-nitrilo triethyl titanate (or titanium aminotriethanolate) and mineral titanates like calcium titanate.

6. A process according to Claim 5, characterised in that the quantity of catalyst represents at least 0.005% by weight/total weight of the reagents, and preferably 0.01% to 2% by weight/weight.

7. A process according to Claim 1, characterised in that the esterification reaction described is carried out at a temperature of between 210°C and 280°C, and preferably between 220°C and 260°C.

8. A process according to Claim 7, characterised in that the direct esterification reaction is carried out in the presence of a catalyst selected from metal derivatives, such as metal carboxylates like manganese acetate, zinc acetate, cobalt acetate or calcium acetate; organic titanates like butyl titanate or 2,2',2"-nitrilo triethyl titanate (or titanium aminotriethanolate) and mineral titanates such as calcium titanate.

9. A process according to Claim 8, characterised in that the quantity of direct esterification catalyst represents at least 0.005% by weight in relation to the weight of isophthalic acid and ethylene glycol used in said direct esterification reaction, and preferably between 0.01% and 2% by weight/weight.

10. A process according to Claim 1, characterised in that the polycondensation reaction is carried out at a temperature of 230°C to 280°C, and preferably of 240°C to 260°C.

11. A process according to Claim 10, characterised in that the polycondensation reaction is carried out in the presence of a catalyst selected from antimony trioxide and germanium dioxide.

12. A process according to one of Claims 10 or 11, characterised in that the polycondensation reaction is carried out at a pressure which is less than atmospheric pressure.
